# EUROPEAN PATENT SPECIFICATION

(11) **EP 4 422 856 B1**
(45) Date of publication and mention of the grant of the patent: **08.10.2025**
(21) Application number: 22838658.7
(22) Date of filing: 13.12.2022
(51) Int. Cl.: B29D 99/00

(54) **METHOD FOR MANUFACTURING A WIND TURBINE BLADE**
VERFAHREN ZUR HERSTELLUNG EINES WINDKRAFTANLAGENBLATTS
PROCÉDÉ DE FABRICATION D'UNE PALE D'ÉOLIENNE

(30) Priority: 21.12.2021 EP 21216387
(43) Date of publication of application: 04.09.2024
(73) Proprietor: Siemens Gamesa Renewable Energy A/S, 7330 Brande (DK)
(72) Inventor: CHIESURA, Gabriele, 9000 Aalborg (DK); KRISTENSEN, Jens Jørgen Østergaard, 9400 Nørresundby (DK); LEE, Jotham, 9000 Aalborg (DK)
(74) Representative: SGRE-Association
(86) International application number: PCT/EP2022/085530
(87) International publication number: WO 2023/117567

(56) References cited:
- EP-B1- 3 066 338
- WO-A1-2016/189092

## Description

The present invention relates to a method for manufacturing a wind turbine blade.

The wind harvest and, thus, energy production of a wind turbine at a given site depends on the rotor diameter. With a larger rotor diameter and, hence, larger blade sizes, a larger area can be swept by the blades. Current blade lengths reach 100 meter and more. Manufacturing and transporting large wind turbine blades are becoming increasingly difficult for increasing blade sizes. Therefore, wind turbine blades are, for example, manufactured section-wise and joined in a later production step, as proposed in EP 3 747 639 Al. However, assembling a wind turbine blade from two or more blade sections in an efficient manner and, at the same time, providing a sufficient strength of the blade to withstand forces acting on the blade during operation of the wind turbine is challenging.

EP 3 066 338 Bl shows a modular wind turbine blade. The blade further comprises at least one longitudinally extending spar structure that forms part of the outer shells of the first and second blade modules when the modules are connected. The spar structure is integrated with the first blade module and the spar structure is folded or coiled to facilitate transportation of the module. The second blade module includes channels defined in the outer shell for receiving the spar structure when the modules are connected.

WO 2016/189092 A1 shows another modular wind turbine blade.

It is one object of the present invention to provide an improved method for manufacturing a wind turbine blade.

Accordingly, a method for manufacturing a wind turbine blade is provided. The wind turbine blade comprises a load-carrying beam extending in a longitudinal direction of the blade and having a predetermined total length. The method comprises the steps:
a) aligning at least two blade sections with each other, each blade section comprising a shell with an outer recess, the outer recesses forming in the aligned state an overall outer recess having the predetermined total length, and
b) arranging a fiber lay-up in the overall outer recess for forming the load-carrying beam.

Thus, the blade is produced from at least two blade sections allowing an easier manufacture of even very large blades. Furthermore, the at least two blade sections are pre-manufactured and the load-carrying beam is implemented in a subsequent production step. In particular, the at least two blade sections are pre-manufactured such that they comprise a recess for later adding the fiber lay-up for the load-carrying beam. Hence, the at least two blade sections can be positioned and aligned with each other without the presence of the load-carrying beam or portions of the load-carrying beam. Thus, handling of the at least two blade sections is simplified.

Further, having the aligned blade sections with the outer recess spanning the entire length of the load-carrying beam, opens the possibility to manufacture the load-carrying beam as a continuous structural element without piecing it together. Thus, discontinuities in the material of the load-carrying beam can be avoided. Therefore, a higher structural integrity of the blade is achieved.

The method comprises, in particular, the step of providing the at least two pre-manufactured blade sections each comprising a shell portion with an outer recess.

The at least two blade sections are at least two longitudinal blade sections dividing the blade lengthwise. The at least two blade sections comprise, in particular, at least one inboard blade section and at least one outboard blade section. In particular, the at least two blade sections are configured to form, in the assembled state, the entire blade.

The at least two blade sections are, in particular, pre-manufactured. The at least two blade sections are, for example, pre-casted. Pre-manufacturing the at least two blade sections is, for example, carried out at a first production site. Aligning and joining the at least two blade sections is, for example, carried out at a second production site different and/or located remote from the first production site.

The outer recess of each of the at least two blade sections extends, in particular, in the longitudinal direction of the blade. Further, the overall outer recess of the blade sections in the aligned state, extends, in particular, in the longitudinal direction of the blade.

The aligned state is, in particular, the aligned state of the bade sections.

The at least two blade sections are, in particular, aligned with each other such that their outer recesses are aligned with each other and form the overall outer recess.

The at least two blade sections are, in particular, aligned with each other by using an alignment tool and/or placing each of them on a support structure.

The wind turbine blade is provided to become part of a rotor of a wind turbine. The wind turbine is an apparatus to convert the wind's kinetic energy into electrical energy. The wind turbine comprises, for example, the rotor having one or more of the blades connected each to a hub, a nacelle including a generator, and a tower holding, at its top end, the nacelle. The tower of the wind turbine may be connected to a foundation of the wind turbine such as a monopile or concrete foundation in the seabed or ground.

In the installed state of the wind turbine, the blade, e.g., a root portion of the blade, is, for example fixedly or rotatably connected to the hub. The wind turbine blade is, for example, directly bolted to the hub, or is connected via a pitch bearing to the hub. The pitch bearing is configured to adjust the angle of attack of the blade according to the wind speed to control the rotational speed of the blade.

Apart from the essentially cylindrical root portion configured for connection with the hub, the outer surface of the wind turbine blade has an aerodynamically shaped cross section (airfoil). The aerodynamically shaped cross section of the wind turbine blade comprises, for example, a pressure side (upwind side) and a suction side (downwind side). The pressure side and the suction side are connected with each other at a leading edge and a trailing edge.

The blade shell of the blade sections is, for example, manufactured from fiber-reinforced resin laminate by infusing plies of fiber material in a mold with a resin and curing the resin. The blade shell is, for example, manufactured by vacuum-infusion of resin into a fiber lay-up and curing the resin. However, the blade shell may also be manufactured by a different method. The blade shell has, in particular, an outer surface and an inner surface, wherein the outer surface defines the aerodynamic profile of the blade, and the inner surface defines an inner cavity of the blade.

The blade includes at least one load-carrying beam. In the manufactured state of the blade, the load-carrying beam is, in particular, embedded in the blade shell. The load-carrying beam is a structural element reinforcing the blade shell and/or taking up mechanical load during operation of the wind turbine.

The blade may comprise two or more load-carrying beams. In this case, each blade section may comprise, for example, two or more outer recesses such that two or more overall outer recesses are formed in the aligned state of the blade sections. Each of the two or more overall outer recesses extends in the longitudinal direction of the blade and is configured to receive a fiber lay-up for forming one of the two or more load-carrying beams.

According to an embodiment, the at least two blade sections are aligned with each other in a state in which their outer recesses are vacant.

In particular, the at least two blade sections are aligned with each other in a state in which their outer recesses are empty and do not comprise the load-carrying beam or portions of the load-carrying beam.

According to a further embodiment, in step b), the fiber lay-up for the entire load-carrying beam is arranged in the overall outer recess and/or the fiber lay-up is arranged in the overall outer recess such that the arranged fiber lay-up has the predetermined total length.

Hence, a continuous load-carrying beam without discontinuities at a joint can be provided which leads to a high structural strength of the load-carrying beam.

According to a further embodiment, the fiber lay-up includes a dry fiber lay-up, a semi-dry fiber lay-up and/or a pre-impregnated fiber lay-up.

A dry fiber lay-up is, in particular, a fiber lay-up without any resin. A semi-dry fiber lay-up and a pre-impregnated fiber lay-up is, in particular, a fiber lay-up including resin in an uncured and/or semi-cured stage.

According to a further embodiment, the overall outer recess forms a mold for casting the load-carrying beam.

Thus, advantageously, the outer recess of the blade shell itself provides a mold for casting the laminate for forming the load-carrying beam. Hence, the load-carrying beam is casted and at the same time joined with the blade shell, in particular with a surface of the outer recess of the blade shell.

The fiber lay-up is, for example, infused with resin in the mold formed by the outer recess and then cured.

According to a further embodiment, the method includes the steps of covering the fiber lay-up with a vacuum bag, infusing the fiber lay-up with resin and/or curing the resin.

The vacuum bag is, for example, sealed at the outer surface of the blade shell of the blade sections.

The fiber lay-up is, for example, infused with resin in a vacuum-induced infusion process.

The resin is, for example, cured by applying heat. For example, heat blankets may be applied on the exposed portion of the fiber lay-up arranged in the outer recess.

In the case of the fiber lay-up being a semi-dry and/or pre-impregnated fiber lay-up already containing resin, only the step of (covering the fiber lay-up with a vacuum bag and) curing the resin may be carried out but not the step of infusing further resin.

According to a further embodiment, the fiber lay-up includes a pre-casted fiber lay-up.

For example, the fiber lay-up may include the pre-casted fiber lay-up in addition to a dry, semi-dry and/or pre-impregnated fiber lay-up. In this case, resin infusion and/or curing of the dry, semi-dry and/or pre-impregnated fiber lay-up may be applied to join the pre-casted fiber lay-up with an inner surface of the outer recess of the blade shell.

In another example, the fiber lay-up may include only the pre-casted fiber lay-up but no additional dry, semi-dry and/or pre-impregnated fiber lay-up.

According to a further embodiment, step b) includes applying an adhesive in the overall outer recess and/or on the pre-casted fiber lay-up before arranging the fiber lay-up in the overall outer recess.

According to a further embodiment, the load-carrying beam is a spar cap, a leading-edge reinforcement beam or a trailing-edge reinforcement beam.

The spar cap is one of the key structures inside a rotor blade and takes up most of the mechanical load of the blade during operation of the wind turbine. Hence, a high stiffness of the spar cap is essential for rotor blades of extreme length. Therefore, manufacturing a spar cap without discontinuities in the material is of advantageous for the structural integrity of the blade.

According to a further embodiment, the fiber lay-up includes carbon fibers and/or glass fibers.

Carbon fibers are lighter by volume (e.g., by about 30%) than glass fibers. Further, carbon fibers provide higher tensile strength and higher compressive strength than glass fibers.

In particular, as the blade length continues to increase, carbon fiber reinforcement in spar caps is an efficient way to reduce the overall weight to length ratio and increase the blade stiffness.

According to a further embodiment, the method includes the step of casting the at least two blade sections by using a respective mold including a protrusion at an inner mold surface for forming the outer recess.

The protrusion may be either integrated in the mold geometry (i.e. the mold (portion) and the protrusion are a one-piece element) or may be added as an add-on insert to the mold surface.

According to a further embodiment, the at least two blade sections include at least an inboard blade section comprising a root portion and an outboard blade section comprising a tip portion, and/or the at least two blade sections are aligned with each other by performing a global root to tip alignment.

According to a further embodiment, the method includes the step of joining the at least two blade sections with each other.

The at least two blade sections may be joined with each other, for example, from inside the blade cavity.

The at least two blade sections may, for example, be joined with each other by using a mandrel tool comprising a dry, semi-dry and/or pre-impregnated fiber lay-up. The mandrel tool is, for example, inserted into a first one of the at least two blade sections. Further, an adjacent one of the first one of the at least two blade sections is aligned with the first one such that the adjacent one accommodates the mandrel tool.

The at least two blade sections may be joined with each other, in particular, after step b) of arranging the fiber lay-up in the overall outer recess. Furthermore, the at least two blade sections may be joined with each other, for example, after or in parallel with infusing the fiber lay-up with resin and/or curing the resin.

According to a further embodiment, each of the at least two blade sections comprises a shear web portion, and joining the at least two blade sections with each other includes connecting the shear web portions of the at least two blade sections with each other.

The shear web (portion) is, in particular, a spar web (portion).

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows a wind turbine according to an embodiment;
Fig. 2 shows a portion of a blade of the wind turbine of Fig. 1 in a perspective view;
Fig. 3 shows, in cross-section, a portion of a blade shell of the blade of Fig. 2 during a manufacturing step;
Fig. 4 shows a mold for pre-manufacturing a blade section of the blade of Fig. 2;
Fig. 5 shows the blade of Fig. 2 in a perspective view during a manufacturing step;
Fig. 6 shows a view similar as Fig. 3 but with a fiber lay-up arranged in a recess of the blade shell;
Fig. 7 shows a view similar as Fig. 3 but with a pre-casted fiber lay-up arranged in the recess of the blade shell; and
Fig. 8 shows a flowchart illustrating a method for manufacturing a blade of the wind turbine of Fig. 1 according to an embodiment.

In the Figures, like reference numerals designate like or functionally equivalent elements, unless otherwise indicated.

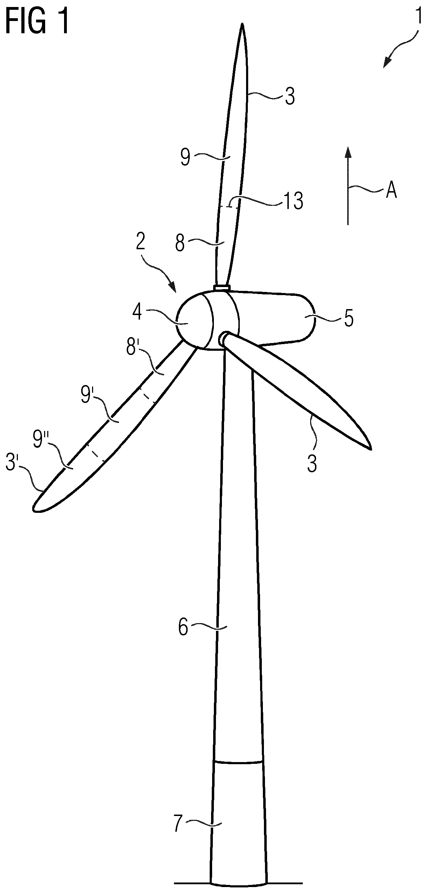

Fig. 1 shows a wind turbine 1 according to an embodiment. The wind turbine 1 comprises a rotor 2 having one or more blades 3, 3' connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged at the upper end of a tower 6 of the wind turbine 1. The tower 6 is erected on a foundation 7 such as a concrete foundation or a monopile driven into the ground or seabed.

As indicated in Fig. 1, one or more of the blades 3 of the wind turbine 1 are manufactured from at least two individual blade sections 8, 9. The at least two individual blade sections 8, 9 are dividing the blade 3 in a longitudinal direction A of the blade 3. During a manufacturing process, the two or more blade sections 8, 9 are, in particular, pre-manufactured, positioned next to each other, accurately aligned with each other and finally joined with each other to form the manufactured blade 3.

By way of example, a blade 3 in Fig. 1 is shown to be assembled from two individual blade sections 8, 9. As a further example, a blade 3' in Fig. 1 is shown to be assembled from three individual blade sections 8', 9', 9". Although not illustrated, one or more of the blades 3, 3' may also be manufactured from more than three individual blade sections.

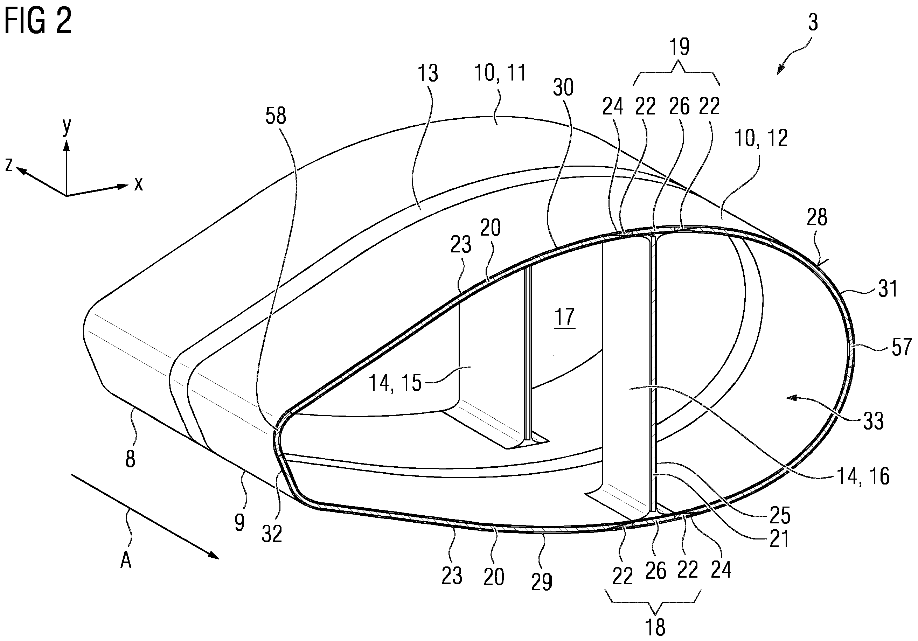

Fig. 2 shows a perspective view of a portion of the wind turbine blade 3 of the wind turbine 1 of Fig. 1 according to an embodiment of the invention. In this illustration, the wind turbine blade 3 is sectionally cut from two sides running perpendicular to a longitudinal axis A of the blade 3.

As the wind turbine blade 3 is assembled from at least two individual blade sections 8 and 9, the wind turbine blade 3 comprises a shell 10 including several shell portions 11, 12. In particular, each of the at least two blade sections 8 and 9 comprises a shell portion 11, 12 which are joined together by means of a shell joint 13.

Further, the wind turbine blade 3 comprises a spar web 14. The spar web 14 is shown having a first spar web portion 15 and a second spar web portion 16. In particular, each of the at least two blade sections 8 and 9 comprises a respective spar web portion 15, 16. In Fig. 2, the first spar web portion 15 and the second spar web portion 16 are shown to be separated from one another by means of a gap 17. The gap 17 has the purpose of enabling joining the first shell portion 11 with the second shell portion 12 by means of the shell joint 13. The gap 17 may afterwards be closed by means of a third spar web portion which is not shown in this illustration.

Furthermore, the wind turbine blade 3 comprises two spar caps 18, 19. The two spar caps 18, 19 are connected to one another by means of the spar web 14.

The shell 10, the spar web 14 and/or the spar caps 18, 19 may each comprise a core material 20, 21, 22 being covered by a laminate 23, 24, 25. Further, each of the two spar caps 18, 19 may comprise a reinforcement profile 26.

The wind turbine blade 3 as shown in Fig. 2 has a spar (i.e., spar caps 18, 19 and spar web 14) of an I-beam type. However, it is also possible to provide the wind turbine blade 3 with a spar of a different type, such as a box type. In a box type, there are four spar caps 18, 19 and two spar webs 14, wherein each pair of two spar caps 18, 19 is connected by means of a separate spar web 14.

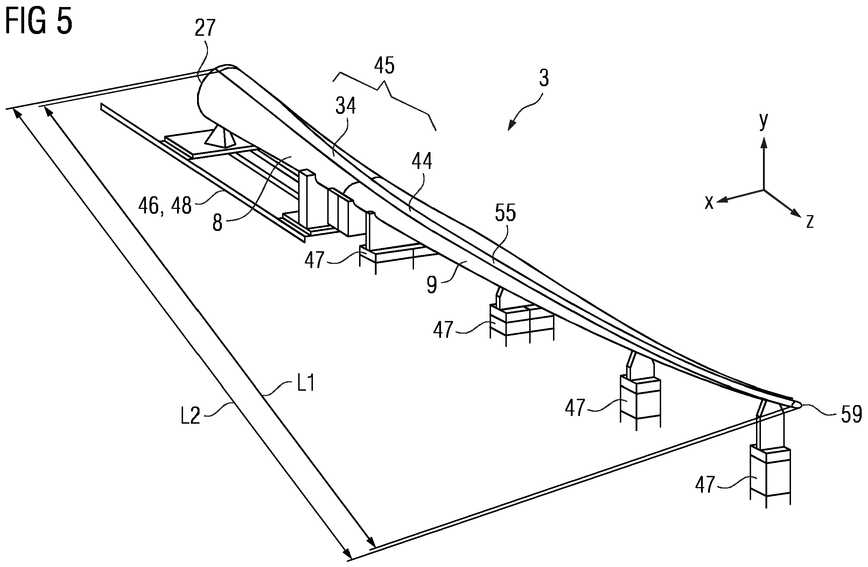

The blade 3, for example the blade section 8 (inboard blade section 8) comprises a root portion 27 (Fig. 5) with an essentially cylindrical cross-section. Apart from the (cylindrical) root portion 27 configured for connection with the hub 4 (Fig. 1), the wind turbine blade 3 has, as seen in cross-section, an aerodynamically shaped outer surface (airfoil). The airfoil of the blade 3 most commonly changes in shape along the blade 3 in a spanwise direction (longitudinal direction A). As illustrated in Fig. 2, the shell 10 of the wind turbine blade 3, i.e. the shell portions 11, 12 of each of its blade sections 8, 9, comprises, for example, a pressure side 29 (upwind side) and a suction side 30 (downwind side). The pressure side 29 and the suction side 30 are connected with each other at a leading edge 31 and a trailing edge 32. The pressure and suction sides 29, 30 and the leading and trailing edges 31, 32 define an interior cavity 33 of the blade 3.

In Fig. 2, the spar cap 18 is arranged at the pressure side 29 of the shell 10. Moreover, the spar cap 19 is arranged at the suction side 30 of the shell 10. The spar web 14 is connecting the pressure side 29 and the suction side 30 to transfer shear forces. In case of a box-type spar, there would be, for example, two spar caps 18 arranged at the pressure side 29 and two spar caps 19 arranged at the suction side 30.

In the manufactured state of the blade 3, each of the spar caps 18, 19 has a predetermined total length L1 (Fig. 5). Furthermore, a length of the blade 3 is denoted with a reference sign L2 in Fig. 5. The predetermined total length L1 of each of the spar caps 18, 19 is, in particular, equal to or smaller than the length L2 of the blade 3.

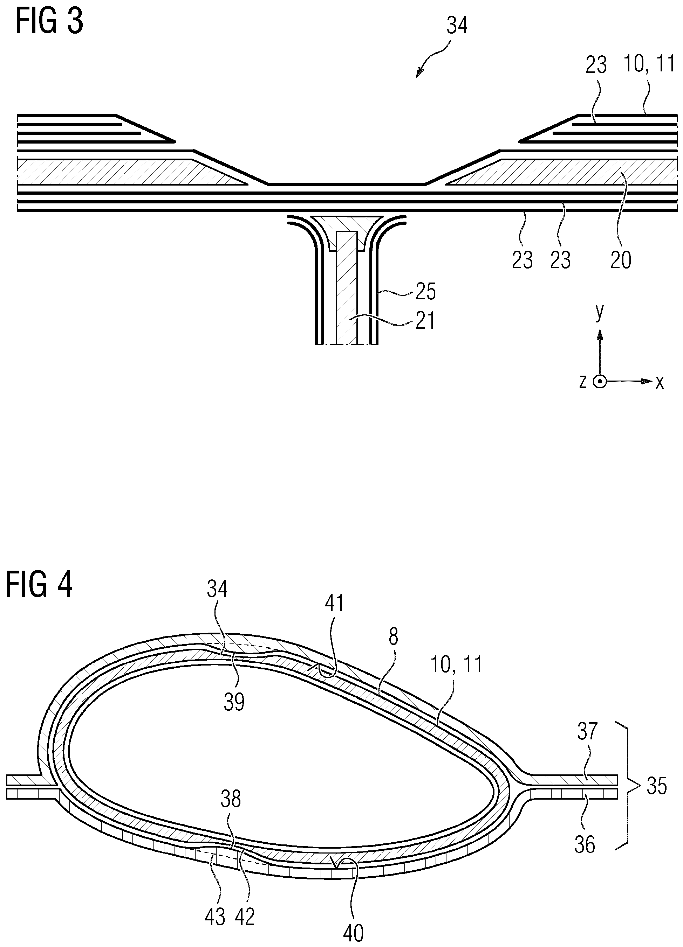

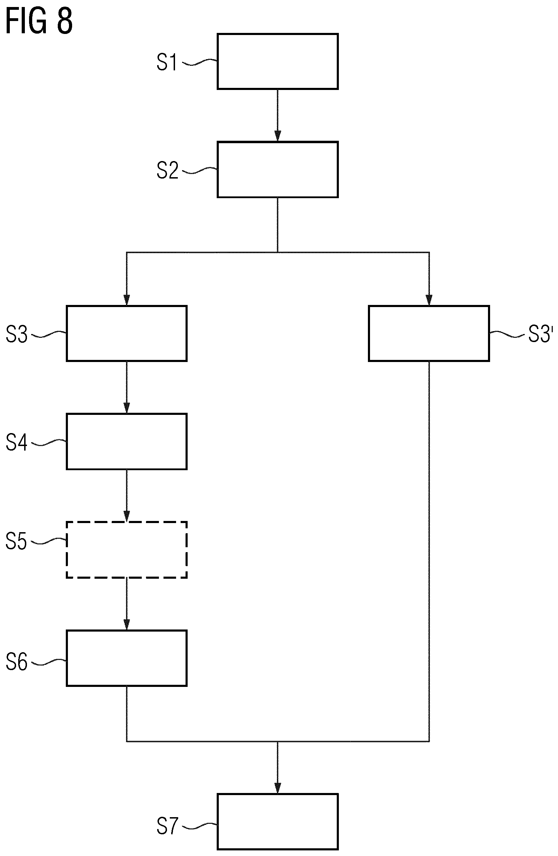

In the following, a method for manufacturing a wind turbine blade 3, 3' is described with respect to Figs. 3 to 8.

In a first step S1 of the method, the at least two blade sections 8, 9 are provided. In step S1, the at least two blade sections 8, 9 do not yet comprise any of the spar caps 18, 19. Rather, each blade section 8, 9 comprises at least one recess 34, 44 in its shell portion 11, 12 for later accommodating a respective spar cap 18, 19. In Figs. 3 and 5, a recess 34 of the shell portion 11 of the blade section 8 at the suction side 30 as well as a recess 44 of the shell portion 12 of the blade section 9 at the suction side 30 are illustrated. The recesses 34 and 44 are each extending parallel to the longitudinal direction A (the Z-direction in Figs. 3 and 5) of the blade 3. Although not visible in Figs. 3 and 5, there is a further recess (see reference sign 42 in Fig. 4) of each shell portion 11, 12 present at the pressure side 29, the further recesses also extending parallel to the longitudinal direction A.

Step S1 may include pre-manufacturing the at least two blade sections 8, 9. As illustrated in Fig. 4 for the blade section 8, a mold 35 comprising a lower mold portion 36 and an upper mold portion 37 may be used for casting the at least two blade sections 8, 9. The mold 35, for example each of the upper and lower mold portions 36, 37 may include a protrusion 38, 39 at an inner mold surface 40, 41 for forming the respective outer recess 34, 42. The respective protrusion 38, 39 may be an integral part of the mold portion, as illustrated for the upper mold portion 37 (i.e. the mold portion 37 and the protrusion 39 are forming a one-piece element). Alternatively, the respective protrusion 38, 39 may be an add-on insert 43 attached to the mold portion, as illustrated with a dashed line for the lower mold portion 36.

The at least two blade sections 8 and 9 are each made, for example, from a fiber-reinforced resin laminate. The at least two blade sections 8, 9 are, for example, manufactured by infusing a dry fiber lay-up (not shown) in the mold 35 with resin (not shown) by a vacuum infusion process. However, the blade sections 8, 9 may be pre-manufactured also in a different way.

Further, the spar web portions 15, 16 (Fig. 2) may be provided in step S1 such that each of the at least two blade sections 8, 9 includes a respective spar web portion 15, 16 joined with its respective shell portion 11, 12.

In a second step S2 of the method, the at least two blade section 8, 9 are aligned with each other, as shown in Fig. 5. In particular, the at least one outer recess 34, 42 of the shell portion 11 of the inboard blade section 8 is aligned with the at least one outer recess 44 of the shell portion 12 of the outboard blade section 9. In the aligned state of the at least two blade sections 8, 9, at least one overall outer recess 45 is formed. The at least one overall outer recess 45 has the predetermined total length L1 (Fig. 5). During and at the end of step S2, the outer recesses 34, 42, 44 are, in particular, vacant.

In the example of Fig. 5, the at least two blade sections 8, 9 include the inboard blade section 8 comprising the root portion 27 and the outboard blade section 9 comprising a tip portion 59.

The at least two blade sections 8, 9 are, for example, aligned with each other by using an alignment tool 46 (Fig. 5). The alignment tool 46 comprises, for example, an outboard support structure 47 for positioning the outboard blade section 9 and an inboard support structure 48 for positioning the inboard blade section 8. The inboard support structure 48 may be configured for moving the inboard blade section 8 with respect to the (e.g., fixed) outboard blade section 9. The inboard support structure 46 may, for example, be configured to move the inboard blade section 8 in six degrees of freedom (X, Y, Z, Rot_{X}, Rot_{Y}, Rot_{Z}) with respect to the (e.g., fixed) outboard blade section 9. The direction X, Y, Z are perpendicular to each other.

In step S2, the at least two blade sections 8, 9 are, for example, aligned with each other by performing a global root to tip alignment from the root 27 to the tip 59 of the blade 3 (Fig. 5).

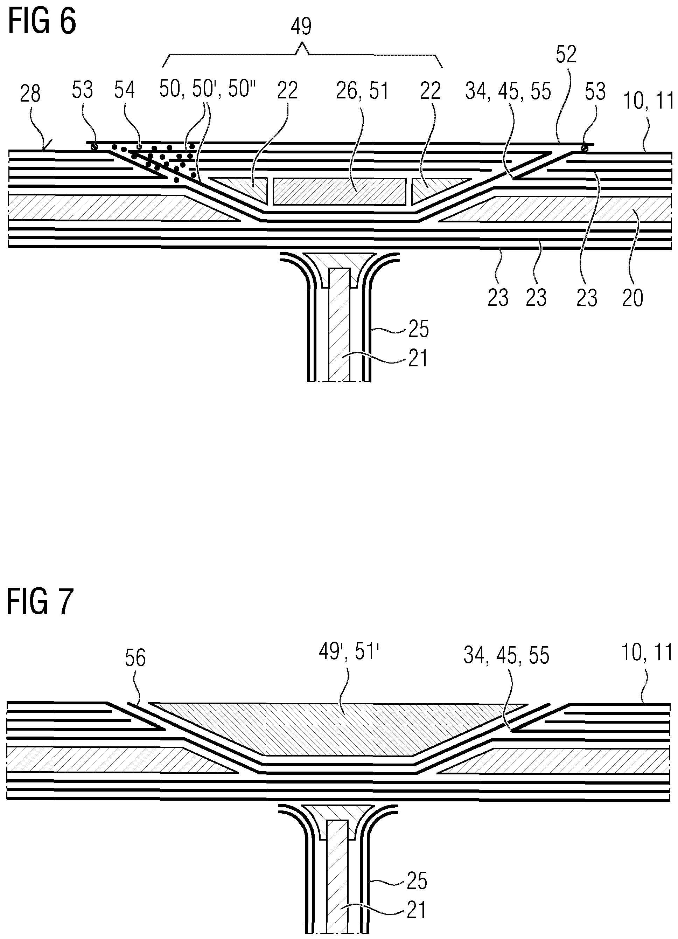

In a third step S3 of the method, a fiber lay-up 49 (Fig. 6) is arranged in the overall outer recess 45 for forming one of the spar caps 18, 19 (Fig. 2). In Fig. 6, the overall outer recess 45 at the suction side 30 of the blade 3 is shown. The illustrated fiber lay-up 49 is, hence, configured to become - in the manufactured state of the blade 3 - the spar cap 19 (Fig. 2) at the suction side 30. Likewise, but not shown in the figures, a fiber lay-up similar as the fiber lay-up 49 is arranged in an overall recess provided at the pressure side 29 of the blade 3.

In step S3, the fiber lay-up for the entire spar cap 19 is arranged in the overall outer recess 45. Further, when arranged, the fiber lay-up 49 has the predetermined total length L1 (Fig. 5).

The fiber lay-up 49 may include a dry fiber lay-up 50, a semi-dry fiber lay-up 50' and/or a pre-impregnated fiber lay-up 50" (Fig. 6). In addition or instead, the fiber lay-up 49 may include a pre-casted fiber lay-up 51 such as a pre-casted reinforcement profile 26. Furthermore, the fiber lay-up 49 may include a core material 22.

The fiber lay-up 49 may include carbon fibers which are lighter by volume than glass fibers and provide higher tensile strength and higher compressive strength than glass fibers. In particular, by using a carbon fiber reinforcement in the spar cap 18, 19, a reduced overall weight to length ratio and an increased blade stiffness may be achieved, which is of importance in particular for manufacturing very long blades.

In addition or instead to carbon fibers, the fiber lay-up 49 may also include glass fibers.

In the case that the fiber lay-up 49 arranged in the overall recess 45 includes the dry fiber lay-up 50, the semi-dry fiber lay-up 50' and/or the pre-impregnated fiber lay-up 50", the following steps S4 to S6 are carried out and/or at least step S6 is carried out. It is noted that the in the case that the fiber lay-up 49 arranged in the overall recess 45 includes the dry, semi-dry and/or pre-impregnated fiber lay-up 50, 50', 50", the fiber lay-up may in addition also include a pre-casted fiber lay-up 51.

In a fourth step S4 of the method, the fiber lay-up 49 is covered with a vacuum bag 52 (Fig. 6). The vacuum bag 52 is, for example, sealed with sealing elements 53 at an outer surface 28 of the shell 10.

In a fifth step S5 of the method, the fiber lay-up 49 is infused with resin 54 (Fig. 6) by vacuum-induced resin infusion. In the case that the fiber lay-up 49 includes the semi-dry and/or pre-impregnated fiber lay-up 50', 50" but no completely dry fiber lay-up 50, step S5 may be omitted.

In a sixth step S6 of the method, the resin 54 infused in step S5 or a resin already contained in the semi-dry and/or pre-impregnated fiber lay-up 50', 50" is cured. For example, heat is applied in the curing step.

In steps S5 and S6, the overall outer recess 45 having the predetermined total length L1 is used as a mold 55 (Figs. 5 and 6) in the resin infusion process (S5) and/or for curing the fiber lay-up 49 infused or pre-impregnated with resin 54. Thus, a continuous spar cap 18, 19 having the predetermined total length L1 is casted in one go. Hence, joining processes of spar cap sections and joining interfaces of a spar cap are avoided.

In the case that the fiber lay-up 49' arranged in the overall recess 45 includes only a pre-casted fiber lay-up 51' but no dry, semi-dry and/or pre-impregnated fiber lay-up 50, 50' 50" (Fig. 7), a variant of step S3 may be carried out in a step S3'. In step S3', an adhesive 56 (Fig. 7) is applied in the overall outer recess 45 and/or on the pre-casted fiber lay-up 51' before arranging the fiber lay-up 49' including the pre-casted fiber lay-up 51' in the overall outer recess 45. Furthermore, steps S4 to S6 are omitted in this case.

In a seventh step S7 of the method, the at least two blade sections 8, 9 are joined with each other. In particular, the shell portions 11, 12 of the at least two blade sections 8, 9 are joined with each other to form the shell joint 13 (Fig. 2). This joining process is, for example, performed from within the inner cavity 33 (Fig. 2) of the blade 3.

In step S7, also the shear web portions 15 and 16 (Fig. 2) may be connected with each other. For example, a further shear web portion (not shown) may be arranged in the gap 17 (Fig. 2) and joined with the two shear web portions 15 and 16.

The method has been described as an example for a spar cap 18, 19 as a load-carrying beam. However, in other examples, instead of or in addition to a spar cap 18, 19 also a leading-edge reinforcement beam 57 (Fig. 2) and/or a trailing edge reinforcement beam 58 as a load-carrying beam may be manufactured by the described method.

Concludingly, by producing blades 3, 3' of a wind turbine 1 from several blade sections 8, 9 dividing the blade 3, 3' in its longitudinal direction A, larger blades can be manufactured. Advantageously, the at least two blade sections 8, 9 are pre-manufactured and the load-carrying beam, e.g., the spar cap 18, 19, is implemented in a subsequent production step only. Further, having the overall outer recess 45 (Fig. 5) spanning the entire length L1 of the load-carrying beam, e.g., the spar cap 18, 19 allows to manufacture the load-carrying beam as a continuous structural element without piecing it together. Thus, discontinuities in the material of the load-carrying beam can be avoided. Therefore, a higher structural integrity of the blade 3, 3' is achieved.

Although the present invention has been described in accordance with preferred embodiments, it is obvious for the person skilled in the art that modifications are possible in all embodiments provided they fall within the scope of the appended claims.

## Claims

1. A method for manufacturing a wind turbine blade (3) comprising a load-carrying beam (18, 19) extending in a longitudinal direction (A) of the blade (3) and having a predetermined total length (L1), comprising:
a) aligning (S2) at least two blade sections (8, 9) with each other, each blade section (8, 9) comprising a shell (11, 12) with an outer recess (34, 44), the outer recesses (34, 44) forming in the aligned state an overall outer recess (45) having the predetermined total length (L1), and
b) arranging (S3) a fiber lay-up (49) in the overall outer recess (45) for forming the load-carrying beam (18, 19).

2. The method according to claim 1, wherein the at least two blade sections (8, 9) are aligned (S2) with each other in a state in which their outer recesses (34, 44) are vacant.

3. The method according to claim 1 or 2, wherein in step b) the fiber lay-up (49) for the entire load-carrying beam (18, 19) is arranged (S2) in the overall outer recess (45) and/or the fiber lay-up (49) is arranged (S2) in the overall outer recess (45) such that the arranged fiber lay-up (49) has the predetermined total length (L1).

4. The method according to one of claims 1 - 3, wherein the fiber lay-up (49) includes a dry fiber lay-up (50), a semi-dry fiber lay-up (50') and/or a pre-impregnated fiber lay-up (50").

5. The method according to one of claims 1 - 4, wherein the overall outer recess (45) forms a mold (55) for casting the load-carrying beam (18, 19).

6. The method according to one of claims 1 - 5, including the steps of covering (S4) the fiber lay-up (49) with a vacuum bag (52), infusing (S5) the fiber lay-up (49) with resin (54) and/or curing (S6) the resin (54).

7. The method according to one of claims 1 - 6, wherein the fiber lay-up (49, 49') includes a pre-casted fiber lay-up (51, 51').

8. The method according to claim 7 and one of claims 1 - 3, wherein step b) (S3') includes applying an adhesive (56) in the overall outer recess (45) and/or on the pre-casted fiber lay-up (51') before arranging the fiber lay-up (49') in the overall outer recess (45).

9. The method according to one of claims 1 - 8, wherein the load-carrying beam (18, 19) is a spar cap (18, 19), a leading-edge reinforcement beam (57) or a trailing-edge reinforcement beam (58).

10. The method according to one of claims 1 - 9, wherein the fiber lay-up (49) includes carbon fibers and/or glass fibers.

11. The method according to one of claims 1 - 10, including the step of casting (S1) the at least two blade sections (8, 9) by using a respective mold (35) including a protrusion (38, 39) at an inner mold surface (40, 41) for forming the outer recess (34, 42, 44).

12. The method according to one of claims 1 - 11, wherein the at least two blade sections (8, 9) include at least an inboard blade section (8) comprising a root portion (27) and an outboard blade section (9) comprising a tip portion (59), and/or the at least two blade sections (8, 9) are aligned with each other by performing a global root-to-tip alignment.

13. The method according to one of claims 1 - 12, including the step of joining (S7) the at least two blade sections (8, 9) with each other.

14. The method according to claim 13, wherein each of the at least two blade sections (8, 9) comprises a shear web portion (15, 16), and joining the at least two blade sections (8, 9) with each other includes connecting the shear web portions (15, 16) of the at least two blade sections (8, 9) with each other.

## Patentansprüche

1. Verfahren zur Herstellung eines Windturbinenblatts (3), das einen lasttragenden Holm (18, 19) umfasst, der in einer Längsrichtung (A) des Blatts (3) verläuft und eine vorgegebene Gesamtlänge (L1) aufweist, umfassend:
a) Ausrichten (S2) von wenigstens zwei Blattabschnitten (8, 9) miteinander, wobei jeder Blattabschnitt (8, 9) eine Schale (11, 12) mit einer äußeren Ausnehmung (34, 44) umfasst, wobei die äußeren Ausnehmungen (34, 44) in dem ausgerichteten Zustand eine gesamte äußere Ausnehmung (45) mit der vorgegebenen Gesamtlänge (L1) bilden, und
b) Anordnen (S3) eines Fasergeleges (49) in der gesamten äußeren Ausnehmung (45, um den lasttragenden Holm (18, 19) zu bilden.

2. Verfahren nach Anspruch 1, wobei die wenigstens zwei Blattabschnitte (8, 9) in einem Zustand, in dem ihre äußeren Aussparungen (34, 44) leer sind, miteinander ausgerichtet (S2) werden.

3. Verfahren nach Anspruch 1 oder 2, wobei bei Schritt b) das Fasergelege (49) für den gesamten lasttragenden Holm (18, 19) in der gesamten äußeren Ausnehmung (45) angeordnet wird (S2) und/oder das Fasergelege (49) in der gesamten äußeren Ausnehmung (45) angeordnet wird (S2), so dass das angeordnete Fasergelege (49) die vorgegebene Gesamtlänge (L1) aufweist.

4. Verfahren nach einem der Ansprüche 1-3, wobei das Fasergelege (49) ein trockenes Fasergelege (50), ein halbtrockenes Fasergelege (50') und/oder ein vorimprägniertes Fasergelege (50") umfasst.

5. Verfahren nach einem der Ansprüche 1-4, wobei die gesamte äußere Ausnehmung (45) eine Form (55) zum Gießen des lasttragenden Holms (18, 19) bildet.

6. Verfahren nach einem der Ansprüche 1-5, das die Schritte des Bedeckens (S4) des Fasergeleges (49) mit einem Vakuumbeutel (52), des Infundierens (S5) des Fasergeleges (49) mit Harz (54) und/oder des Härtens (S6) des Harzes (54) enthält.

7. Verfahren nach einem der Ansprüche 1-6, wobei das Fasergelege (49, 49') ein vorgegossenes Fasergelege (51, 51') enthält.

8. Verfahren nach Anspruch 7 und einem der Ansprüche 1-3, wobei Schritt b) (S3') Aufbringen eines Klebstoffs (56) in der gesamten äußeren Ausnehmung (45) und/oder auf das vorgegossene Fasergelege (51') vor Anordnen des Fasergeleges (49') in der gesamten äußeren Ausnehmung (45) enthält.

9. Verfahren nach einem der Ansprüche 1-8, wobei der lasttragende Holm (18, 19) ein Holmgurt (18, 19), ein Vorderkanten-Verstärkungsholm (57) oder ein Hinterkanten-Verstärkungsholm (58) ist.

10. Verfahren nach einem der Ansprüche 1-9, wobei die Fasergelege (49) Kohlenstofffasern und/oder Glasfasern enthält.

11. Verfahren nach einem der Ansprüche 1-10, das den Schritt des Gießens (S1) der wenigstens zwei Blattabschnitte (8, 9) durch Verwenden einer entsprechenden Form (35), die einen Vorsprung (38, 39) an einer inneren Formoberfläche (40, 41) zum Bilden der äußeren Vertiefung (34, 42, 44) aufweist, enthält.

12. Verfahren nach einem der Ansprüche 1-11, wobei die wenigstens zwei Blattabschnitte (8, 9) wenigstens einen innenliegenden Blattabschnitt (8), der einen Basisabschnitt (27) umfasst, und einen außenliegenden Blattabschnitt (9), der einen Spitzenabschnitt (59) umfasst, enthalten, und/oder die wenigstens zwei Blattabschnitte (8, 9) durch Durchführen einer Gesamtausrichtung von Basis zu Spitze miteinander ausgerichtet werden.

13. Verfahren nach einem der Ansprüche 1-12, umfassend den Schritt des Verbindens (S7) der wenigstens zwei Blattabschnitte (8, 9) miteinander.

14. Verfahren nach Anspruch 13, wobei jeder der wenigstens zwei Blattabschnitte (8, 9) einen Scherstegabschnitt (15, 16) umfasst und Verbinden der wenigstens zwei Blattabschnitte (8, 9) Verbinden der Scherstegabschnitte (15, 16) der wenigstens zwei Blattabschnitte (8, 9) miteinander umfasst.

## Revendications

1. Procédé de fabrication d'une pale d'éolienne (3) comprenant une poutre porteuse de charge (18, 19) s'étendant dans une direction longitudinale (A) de la pale (3) et ayant une longueur totale prédéterminée (L1), comprenant :
a) l'alignement (S2) d'au moins deux sections de pale (8, 9) l'une par rapport à l'autre, chaque section de pale (8, 9) comprenant une coque (11, 12) avec un évidement externe (34, 44), les évidements externes (34, 44) formant, à l'état aligné, un évidement externe global (45) ayant la longueur totale prédéterminée (L1), et
b) l'agencement (S3) d'un empilement de fibres (49) dans l'évidement externe global (45) pour former la poutre porteuse de charge (18, 19).

2. Procédé selon la revendication 1, dans lequel les au moins deux sections de pale (8, 9) sont alignées (S2) l'une par rapport à l'autre dans un état dans lequel leurs évidements externes (34, 44) sont vides.

3. Procédé selon la revendication 1 ou 2, dans lequel, à l'étape b), l'empilement de fibres (49) pour l'ensemble de la poutre porteuse de charge (18, 19) est agencé (S2) dans l'évidement externe global (45) et/ou l'empilement de fibres (49) est agencé (S2) dans l'évidement externe global (45) de sorte que l'empilement de fibres (49) agencé présente la longueur totale prédéterminée (L1).

4. Procédé selon l'une des revendications 1 à 3, dans lequel l'empilement de fibres (49) comprend un empilement de fibres sèches (50), un empilement de fibres semi-sèches (50') et/ou un empilement de fibres pré-imprégnées (50").

5. Procédé selon l'une des revendications 1 à 4, dans lequel l'évidement externe global (45) forme un moule (55) pour le moulage de la poutre porteuse de charge (18, 19).

6. Procédé selon l'une des revendications 1 à 5, comprenant les étapes de recouvrement (S4) de l'empilement de fibres (49) avec un sac à vide (52), d'infusion (S5) de l'empilement de fibres (49) avec une résine (54) et/ou de durcissement (S6) de la résine (54) .

7. Procédé selon l'une des revendications 1 à 6, dans lequel l'empilement de fibres (49, 49') comprend un empilement de fibres pré-moulées (51, 51').

8. Procédé selon la revendication 7 et l'une des revendications 1 à 3, dans lequel l'étape b) (S3') comprend l'application d'un adhésif (56) dans l'évidement externe global (45) et/ou sur l'empilement de fibres pré-moulées (51') avant d'agencer l'empilement de fibres (49') dans l'évidement externe global (45) .

9. Procédé selon l'une des revendications 1 à 8, dans lequel la poutre porteuse de charge (18, 19) est un capuchon de longeron (18, 19), une poutre de renfort de bord d'attaque (57) ou une poutre de renfort de bord de fuite (58).

10. Procédé selon l'une des revendications 1 à 9, dans lequel l'empilement de fibres (49) comprend des fibres de carbone et/ou des fibres de verre.

11. Procédé selon l'une des revendications 1 à 10, comprenant l'étape de moulage (S1) des au moins deux sections de pale (8, 9) en utilisant un moule respectif (35) comportant une saillie (38, 39) au niveau d'une surface de moule interne (40, 41) pour former l'évidement externe (34, 42, 44).

12. Procédé selon l'une des revendications 1 à 11, dans lequel les au moins deux sections de pale (8, 9) comprennent au moins une section de pale intérieure (8) comprenant une partie de racine (27) et une section de pale extérieure (9) comprenant une partie de pointe (59), et/ou les au moins deux sections de pale (8, 9) sont alignées l'une par rapport à l'autre en effectuant un alignement global de la racine à la pointe.

13. Procédé selon l'une des revendications 1 à 12, comprenant l'étape d'assemblage (S7) des au moins deux sections de pale (8, 9) l'une avec l'autre.

14. Procédé selon la revendication 13, dans lequel chacune des au moins deux sections de pale (8, 9) comprend une partie de bande de cisaillement (15, 16), et l'assemblage des au moins deux sections de pale (8, 9) l'une avec l'autre comprend la liaison des parties de bande de cisaillement (15, 16) des au moins deux sections de pale (8, 9) entre elles.
